# EUROPÄISCHE PATENTSCHRIFT

(11) **EP 0 659 816 B1**
(45) Veröffentlichungstag und Bekanntmachung des Hinweises auf die Patenterteilung: **20.06.2001**
(21) Anmeldenummer: 94120604.7
(22) Anmeldetag: 23.12.1994
(51) Int. Cl.: C08K 5/5357, C08L 77/00

(54) **Schwerentflammbare Copolyamide**
Flame retardant copolyamide
Copolyamides résistant à la flamme

(30) Priorität: 23.12.1993 CH 384093; 02.03.1994 DE 4406857
(43) Veröffentlichungstag der Anmeldung: 28.06.1995
(73) Patentinhaber: EMS-INVENTA AG, 8001 Zürich (CH)
(72) Erfinder: Hewel, Manfred, Dr. Rer. Nat., CH-7415 Rodels (CH); Dalla Torre, Hans, Dr. Phil., CH-7013 Domat/Ems (CH)
(74) Vertreter: Becker Kurig Straus

(56) Entgegenhaltungen:
- WO-A-92/13717
- WO-A-93/18914
- US-A- 3 789 091

## Beschreibung

Als flammhemmende Additive für Polymere, speziell für Polyamide gehören zum wohlbekannten Stand der Technik Melaminverbindungen, speziell Melamincyanurat, Cyanognanidin, Thioharnstoff, Magnesium- und Aluminium-Hydroxid, halogenierte, speziell bromierte organische Verbindungen, besonders in Kombination mit Schwermetallsalzen, Phosphor allein und in Kombination mit halogenhaltigen Verbindungen.

Diese Additive sind für transparente Polyamide und Copolyamide ungeeignet, da sie die Transparenz negativ beeinflussen. Außerdem ändern sich auch die mechanischen und physikalischen Eigenschaften der Polyamide bei steigenden Additivmengen in unvorteilhafter Weise. Schwerentflammbare halogenfreie Formteile mit VO-Einstufung nach UL-94 Spezifikation der Underwriter Laboratories, USA sind ganz besonders für die Elektro- und Elektronik-Industrie von Interesse. Dabei ist die Transparenz solcher Formteile eine wichtige Eigenschaft. Die EP-A-0 242 732 schützt Mischungen aus semikristallinen und amorphen Polyamiden mit aromatischen, gesundheitlich nicht unbedenklichen Polyphosphonaten als flammhemmende Additive, ohne jedoch trotz hoher Additiv-Mengen den für die industrielle Anwendung unerläßlichen VO-Wert für 0,8 mm dicke Prüfkörper zu erreichen.

In der DE-AS 26 60 075 wird als flammhemmendes Additiv eine Tetraacetyldiamin-Verbindung, wahlweise in Kombination mit halogenhaltigen Produkten, vorgeschlagen. Diese Additive sind für die Transparenz von Polyamiden nicht geeignet.

In der US-PS 37 89 091 und der US-PS 38 49 368 werden ringförmige Phosphonsäureester als flammhemmende Additive für verschiedene Homopolymere, darunter auch PA 66 beansprucht ohne daß deren Lehre zur Lösung der speziellen Problematik transparenter Copolyamide und insbesondere solcher mit VO-Qualifikation führt.

In WO-A-92/13717 werden flammwidrige, nicht transparente Zweischichtfolien für Kabelanwendungen beschrieben, bei welchen eine Schicht aus PVC und die zweite Schicht aus einem Antiblaze 1045 Typ flammwidrig ausgerüsteten Polyamidschicht besteht. Als weitere Polyamide werden eine Reihe von teilkristallinen Polyamiden wie PA6, PA66, PA46, PA69, PA11 und PA12 sowie amorphe Polyamide auf Basis aromatischer Diamine aus der Gruppe aus m- oder p-Xylendiamin, 2,4- oder 2,6-Diaminotoluol genannt. Gemäß WO-A-92/13717 werden 0,001 bis 20 Gew.-% Phosphonatester zu den Formmassen hinzugegeben, um diese flammwidrig auszurüsten.

Ähnlich wie in WO-A-92/13717 werden auch in WO-A-93/18914 auch flammwidrige Mehrschichtfolien beschrieben. Diese Folien bestehen einerseits aus einem flammwidrig ausgerüsteten Polyolefin und andererseits aus einem flammresistenten Polyamid. Die Folien werden zur Außenisolierung von Stromkabeln eingesetzt. Als Polyamide werden Nylon 6, Nylon 66, Nylon 610, Nylon 46, Nylon 69, Nylon 11 und Nylon 12 sowie andere amorphe Polyamide auf Basis aromatischer Diamine aus der Gruppe aus m- oder p-Xylendiamin, 2,4-oder 2,6-Diaminotoluol genannt. Der Anteil an Antiblaze 1045 beträgt in diesen Polyamidschichten bis zu 50 Gew.-%.

Es ist daher Aufgabe der Erfindung transparente, schwerentflammbare, halogenfreie, ökologisch unbedenkliche Copolyamide mit VO-Qualifikation zur Verfügung zu stellen, woraus dann Formmassen bzw. Formkörper hergestellt werden können.

Diese Aufgabe wird gelöst durch die Copolyamide des Anspruchs 1, die als flammhemmendes Additiv mindestens eine im Copolyamid gelöste Alkylphosphonsäureverbindung der allgemeinen Formel I enthalten: 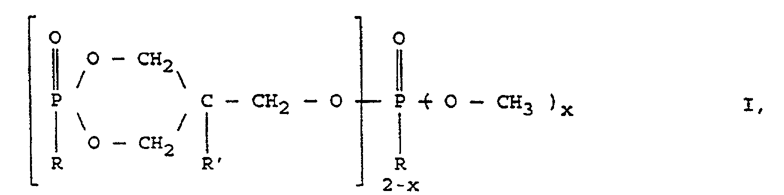 worin R und R' unabhängig voneinander ein Alkyl mit C₁ bis C₄ ist und x = O oder 1, in Anteilen von 4 bis 40 Gew.-%.

Weiterhin wird diese Aufgabe gelöst durch die schwerentflammbaren Formmassen bzw. Formkörper nach den Ansprüchen 8 bzw. 9 sowie durch die Verwendung nach Anspruch 10.

Es wurde festgestellt, daß überraschenderweise transparente Copolyamide bzw. aus diesen Copolyamiden hergestellte Formmassen bzw. Formkörper, die durch eine Alkylphosphonsäureverbindunggemäß der allgemeinen Formel I als additivflammhemmend modifiziert sein können, bereits mit niedrigen Anteilmengen, d.h. bereits bei Anteilen von 4 Gew.-%, VO-Qualifikation erreichen.

Die mindestens eine Alkylphosphonsäure-Verbindung der allgemeinen Formel I liegt in einer Reinheitskonszentration von 60 bis 100 % vor. Der Rest kann gegebenenfalls aus anderen phosphorhaltigen Verbindungen, insbesondere Phosphonsäuren bestehen.

Die Erfindung betrifft daher transparente Copolyamide, die 4 bis 40 Gew.-Anteile mindestens einer Alkylphosphonsäure-Verbindung, speziell eines hochreinen Trimethylolpropanphosphonats enthalten.

Besonders vorteilhaft für die erfindungsgemäßen Copolyamide ist, daß die im Copolyamid gelösten Phosphonsäureverbindungen aus den erfindungsgemässen Copolyamiden nicht migrieren und daß deshalb auf Formteilen selbst bei hohen Temperaturen keine störende Belagsbildung auftritt.

Ein weiterer Vorteil sind die durch die gelösten flammhemmenden Additive praktisch unveränderten mechanischen Eigenschaften der Copolyamide respektive ihrer Formmassen bzw. Formkörper.

Besonders vorteilhaft sind die erfindungsgemäßen Copolyamide, die 4 bis 10 Gew.-% und ganz besonders bevorzugt 4 bis 6 Gew.-% Additiv enthalten.

So sind für ein Copolyamid vom Typ PA 61 MACMT oder PA 12 MACMI nur 4 Gew.-% des Additivs notwendig, um im Standard-Verbrennungstest für Prüfkörper 0,8 mm UL 94 VO zu erreichen.

Als erfindungsgemäße Copolyamide sind solche zu verstehen, die aus den Monomeren aus der Gruppe der Hexamethylenalkylderivate und der cycloaliphatischen Diamine mit 7 bis 22 C-Atomen, in Kombination mit Monomeren der Gruppe aliphatische Dicarbonsäuren mit 4 bis 12 C-Atomen, cycloaliphatische Dicarbonsäuren mit 8 bis 24 C-Atomen und aromatischen Dicarbonsäuren mit 8 bis 20 C-Atomen, ausgewählt sind .

Als amorphe Polyamid-Typen eignen sich die Polyamide PA 12 MACMI (PA 12 Bismethyl-para-aminocyclohexylmethan, Isophthalsäure), PA 12 MACMT (PA 12 Bis-methyl-para-aminocyclohexylmethan, Terephthalsäure), PA 12 MACMI MACMT, PA6I/6T ., PA 12 MACM36, PA NDT INDT (PA 2,2,4-Trimethylhexamethylendiamin, Terephthalsäure/2,4,4-Trimethylhexamethylendiamin, Terephthalsäure), PA NDI INDI(PA2,2,4-Trimethylhexamethylendiamin,Isophthalsäure/2,4,4-Trimethylhexamethylendiamin, Isophthalsäure); PA 6I/6T MACMI, aber auch solche aus den Monomeren wie 1,6-Diamino-2,2',4-trimethylhexan, seinen halogenierten Derivaten, 1,6-Diamino-2,4,4-trimethylhexan und Bis-(p-aminocyclohexyl)methan und seinen Derivaten und Homologen, wie 3,3'-Dimethyl-4,4'-Diamino-dicyclohexylmethan, 4,4'-Diamino-dicyclohexyl-2,2'-propan (PACP), 3-Aminomethyl-3,5,5-trimethylcyclohexylamin (Isophorondiamin), in Kombination mit aliphatischen oder aromatischen Dicarbonsäuren mit 4 bis 12 bzw. 8 bis 20 Kohlenstoffatomen analog ISO-Norm 1874.

Das flammhemmende Additiv gehört zur Gruppe der aliphatischen Polyolester einer alkylierten Phosphonsäure. Bevorzugtes Additiv ist nach Formel I der Trimethylolpropanolester der Methylphosphonsäure bzw. das Methylphosphonsäure-bis-[(5-ethyl-2-methyl-1,3,2-dioxaphosphorinan-5-yl)]ester-P,P'-dioxid der Summenformel C₁₅-H₃₁O₉P₃, das unter dem Handelsnamen Antiblaze 1045 von der Firma Albright & Wilson, USA vertrieben wird (CAS: 42595-45-9), dessen Monomeres oder Gemische davon: 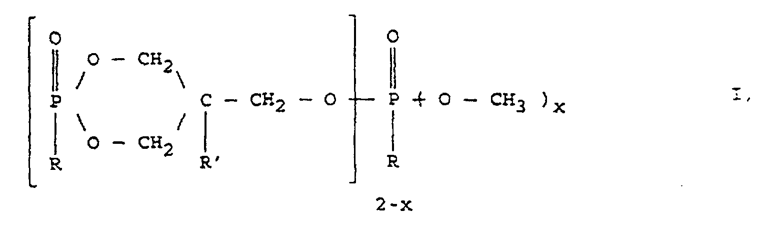 x = O oder 1.

Die Copolyamide können auch Blends von mehreren Copolyamiden oder Copolyamiden mit semikristallinen Polyamiden sein, solange sie transparent sind.

Die schwerentflammbaren Formmassen bzw. Formkörper aus den erfindungsgemäßen transparenten Copolyamiden sind in Form und Ausdehnung nicht begrenzt, besonders da die bereits für den VO-Wert notwendigen Anteilmengen des Additivs im Polymer um 5 Gew.-% die mechanischen Werte nicht beeinflussen.

Die erfindungsgemäßen Copolyamide können weitere verarbeitungsbedingte oder verwendungsnotwendige Additive nach dem Stand der Technik enthalten, die die Transparenz nicht beeinflussen. Unter der gleichen Voraussetzung können die Copolyamide auch weitere Polymere der Gruppe Polycarbonat, Polyester, Polystyrol, Polyaldehyd und bevorzugt weitere Homo- oder Copolyamide als Blendkomponenten enthalten.

Die Erfindung beinhaltet auch die schwerentflammbaren Formmassen bzw. die Formkörper, die aus den erfindungsgemäßen transparenten Copolyamiden durch die Verfahren des Standes der Technik wie Spritzgießen, Extrudieren, Koextrudieren, Blasformen oder Umformen herstellbar sind. Sie beinhaltet in gleicher Weise Formmassen bzw. Formkörper aus Blends der erfindungsgemäßen Copolyamide mit weiteren Polymeren, insbesondere mit solchen aus der Gruppe Polyamide, Polyester, insbesondere Polyethylenterephthalat, Polybutylenterephthalat, Polycarbonat, Polyvinylchlorid, Polyvinylalkohol, Polyurethan, Polyolefin, Polyphenylensulfid, insbesondere Polyethylen und Polypropylen und ihre Gemische oder Blends. Diese Blends können mit Additiven nach dem Stand der Technik, insbesondere solchen aus der Gruppe Verträglichmacher, Schlagzähmodifikatoren, Weichmacher, Stabilisatoren, Pigmente, Verstärkungsmittel, Farb- und Füllstoffe modifiziert sein.

Die Erfindung wird durch folgende Beispiele beschrieben:
Granulat des transparenten Types Grilamid® TR 55 der EMS-CHEMIE AG, ein CoPA 12 MACMI, wird in einem WPF Extruder der Baureihe ZSK 30 aufgeschmolzen bei Temperaturen um 275 °C. In einem Seitenstrom werden 5 Gew.-% des flüssigen Additivs Antiblaze 1045 zudosiert.

Der aus dem Extruder abgezogene transparente Copolyamid-Strang wird in einem Wasserbad gekühlt und in einem konventionellen Granulator zerkleinert. Das bei 110 °C getrocknete Granulat hat ein transparentes, helles Aussehen und neigt weder zum Ausschwitzen noch zur Verklebung. Daraus wurden mittels einer Arburg - 320/210/750 - Spritzgußmaschine DIN Prüfstäbe für die Messung der mechanischen Eigenschaften und solche für die Brenntestprüfung nach UL 94 hergestellt.

Die Prüfstäbe waren einwandfrei transparent und ergaben mechanische Werte, welche um 7-12% von einem Grilamid® TR 55 ohne Antiflamm Additiv abwichen. Der UL 94 Brenntest ergab für 127 x 12,7 x 0,8 Prüfstäbe die Klassierung VO, d.h. nicht brennbar. In gleicher Weise wie Grilamid® TR 55 der EMS-CHEMIE AG wurden die transparenten Granulate, Grilamid® TR 55 LX (ein PA 12/PA 12 MACMI), ein Grivory® G21 (ein PA 6I6T), Grivory® XE 3038 und XE 3355 (zwei PA 616T MACMI Typen), ein Grilamid FE 4230 (ein PA 126T Typ) ferner ein Grilon® TR 2000 (ein PA MACMI MACMX) eingesetzt (bezüglich der vorstehend erwähnten Monomer-Symbole wird auf ISO 1874-1 verwiesen).

Mit 5 Gew.-% Antiblaze 1045 resultierten ebenfalls transparente Granulate ohne Belagsbildung. Die daraus hergestellten Prüfkörper waren ohne Belag und ergaben nach Prüfung der mechanischen Eigenschaften, daß diese um weniger als 10 Prozent von denen der unbehandelten Copolyamide abwichen. Sämtliche Copolyamide wurden gemäß UL 94 Test anhand von 0,8 mm dikken Teststäben als VO, d.h. selbstverlöschend eingestuft.

## Patentansprüche

1. Schwerentflammbare, transparente Copolyamide mit V0-Qualifikation gemäß UL-94 (Teststäbe mit einer Dicke von 0,8 mm), dadurch gekennzeichnet, daß die Monomeren der Copolyamide ausgewählt sind aus der Gruppe der Hexamethylenalkylderivate und der cycloaliphatischen Diamine mit 7 bis 22 C-Atomen, in Kombination mit Monomeren der Gruppe aliphatischer Dicarbonsäuren mit 4 bis 12 C-Atomen, cycloaliphatischen Dicarbonsäuren mit S bis 24 C-Atomen und aromatischen Dicarbonsäuren mit 8 bis 20 C-Atomen. oder Copolyamide sind aus der Gruppe aus
PA 12 PA 12 MACMI, PA 12 MACMI, PA 12 MACMT, PA 12 MACMI MACMT, PA 6I 6T, PA 12 MACM36, PA NDT INDT, PA NDI INDI, PA 6I 6T MACMI, PA 12 6T, PA 6I MACMT und PA MACMI MACMX,
wobei die Copolyamide als flammhemmendes Additiv mindestens eine im Polyamid gelöste Alkylphosphonsäureverbindung der allgemeinen Formel I 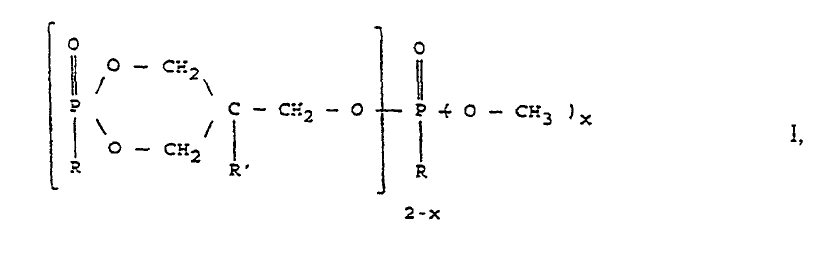 worin R und R' unabhängig voneinander ein C₁ bis C₄ Alkylrest ist,
und x=0 oder 1, ist,
in Anteilen von 4 bis 40 Gew.-% enthalten.

2. Copolyamide gemäß Anspruch 1, dadurch gekennzeichnet, daß die Hexamethylenalkylderivate ausgewählt sind aus der Gruppe 1,6-Diamino-2,2',4-trimethylhexan und 1,6-Diamino-2,4,4'-trimethylhexan.

3. Copolyamide gemäß Anspruch 1, dadurch gekennzeichnet, daß die cycloaliphatischen Diamine ausgewählt sind aus der Gruppe aus Bis-(p-aminocyclohexyl)methan, 3,3'-Dimethyl-4,4'-diamino-dicyclohexylmethan, 4,4'-Diamino-dicyclohexyl-2,2'-propan, 3-Aminomethyl-3,5,5-trimethylcyclohexylamin.

4. Copolyamide nach Anspruch 1, dadurch gekennzeichnet, daß in Formel I R' ein C₂H₅-Rest ist.

5. Copolyamide gemäß Anspruch 1, dadurch gekennzeichnet, daß in Formel I R ein CH₃-Rest ist.

6. Copolyamide gemäß einem der vorhergehenden Ansprüche, dadurch gekennzeichnet. daß sie zum Erreichen der VO-Qualifikation gemäß UL-94 die Alkylphosphonsäureverbindung in Anteilen von 4 bis 10 Gew-% enthalten.

7. Copolyamide gemäß einem der voranstehenden Ansprüche, dadurch gekennzeichnet, daß sie als flammhemmendes Additiv den Trimethylolpropan-Ester einer Methylphosphonsäure bzw. Methyl-Phosphonsäure-bis-[(5-ethyl-2-methyl-1,3,2-dioxaphosphorinan-5-yl) methyl]ester-P-P'-dioxid enthalten.

8. Schwerentflammbare Formmassen bzw. Formkörper mit VO-Qualifikation gemäß UL 94, herstellbar aus transparenten Copolyamiden gemäß einem der Ansprüche 1 bis 7.

9. Schwerentflammbare Formmassen bzw. Formkörper vom VO-Qualifikation gemäß UL 94, herstellbar aus einem Blend aus transparenten Copolyamiden gemäß einem der Ansprüche 1 bis 7 und weiteren Polymeren aus der Gruppe, PET, PBT, PC, PVC, PVA, PU, PE, PP, PPS, wobei die Blends modifiziert sein können mit Additiven aus der Gruppe der Schlagzähmodifikatoren, Weichmacher, Stabilisatoren, Verstärkungsmittel, Pigmente, Farbstoffe und Füllstoffe.

10. Verwendung der Copolyamide gemäß den Ansprüchen 1 bis 7 zur Herstellung von schwerentflammbaren Fäden, Kabeln, Steckern und Platten mit VO-Qualifikation gemäß UL 94.

## Claims

1. Flame-retardant, transparent copolyamides having a VO qualification according to UL-94 (test bars 0.8 mm in thickness) in which the monomers of said copolyamides are selected from the group consisting of hexamethylene alkyl derivatives and cycloaliphatic diamines having 7 to 22 C atoms, in combination with monomers of the group of aliphatic dicarboxylic acids having 4 to 12 C atoms, cycloaliphatic dicarboxylic acids having 8 to 24 C atoms and aromatic dicarboxylic acids having 8 to 20 C atoms, or are copolyamides selected from the group consisting of PA 12 PA 12 MACMI, PA 12 MACMI, PA 12 MACMT, PA 12 MACMI MACMT, PA 6I 6T, PA 12 MACM36, PA NDT INDT, PA NDI INDI, PA 6I 6T MACMI, PA 12 6T, PA 6I MACMT and PA MACMI MACMX in which the copolyamides as a flame-retardant additive contain at least one alkylphosphonic acid compound dissolved in the polyamide which has the general formula I 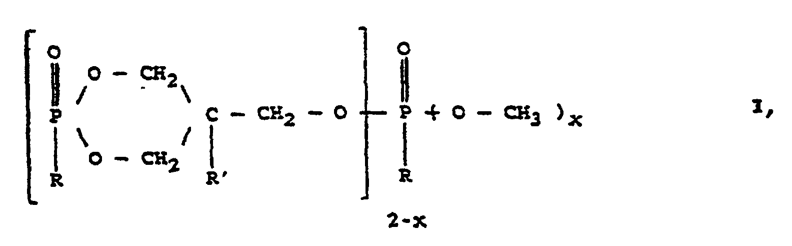 where each of R and R' is, independently of each other, a C₁ to C₄ alkyl residue and x = 0 or 1,
in amounts of 4 to 40 per cent by weight.

2. The copolyamides as claimed in Claim 1 in which the hexamethylene alkyl derivatives are selected from the group consisting of 1,6-diamino-2,2',4-trimethylhexane and 1,6-diamino-2,4,4'-trimethylhexane.

3. The copolyamides as claimed in Claim 1 in which the cycloaliphatic diamines are selected from the group consisting of bis-(p-aminocyclohexyl)methane, 3,3'-dimethyl-4,4'-diamino-dicyclohexylmethane, 4,4'-diamino-dicyclohexyl-2,2'-propane, 3-aminomethyl-3,5,5-trimethyl cyclohexylamine.

4. The copolyamides as claimed in Claim 1 in which R' in formula I is a C₂H₅ residue.

5. The copolyamides as claimed in Claim 1 in which R in formula I is a CH₃ residue.

6. The copolyamides as claimed in any one of the preceding claims in which they contain the alkylphosphonic acid compound in an amount of 4 to 10 per cent by weight to achieve the VO qualification according to UL-94.

7. The copolyamides as claimed in any one of the preceding claims in which they contain as the flame-retardant additive the trimethylolpropane ester of a methylphosphonic acid or methylphosphonic acid-bis-[(5-ethyl-2-methyl-1,3,2-dioxaphosphorinane-5-yl) methyl]ester-P-P'-dioxide.

8. Flame-retardant moulding materials or moulded articles having the VO qualification according to UL-94 which can be made from the transparent copolyamides as claimed in any one of Claims 1 to 7.

9. Flame-retardant moulding materials or moulded articles having the VO qualification according to UL-94 which can be made from a blend of the transparent copolyamides as claimed in any one of Claims 1 to 7 and other polymers selected from the group consisting of PET, PBT, PC, PVC, PVA, PU, PE, PP, PPS in which the blends may be modified with additives selected from the group consisting of impact-strength modifiers, softeners, stabilizers, reinforcing agents, pigments, colouring substances, and fillers.

10. Use of the copolyamides as claimed in Claims 1 to 7 for the manufacture of flame-retardant threads, cables, plugs, and boards/plates having the VO qualification according to UL-94.

## Revendications

1. Copolyamides transparents difficilement combustibles répondant à la qualification VO selon UL-94 (bâtonnets de tests d'une épaisseur de 0,8 mm), caractérisés en ce que les monomères de ces copolyamides sont sélectionnés parmi le groupe constitué par les dérivés alkylés d'hexaméthylène et les diamines cycloaliphatiques ayant de 7 à 22 atomes de carbone, en combinaison avec des monomères issus du groupe des acides dicarboxyliques aliphatiques ayant de 4 à 12 atomes de carbone, des acides dicarboxyliques cycloaliphatiques ayant de 8 à 24 atomes de carbone et des acides dicarboxyliques aromatiques ayant de 8 à 20 atomes de carbone, ou en ce que ces copolyamides sont issus du groupe des
PA 12 PA 12 MACMI, PA 12 MACMI, PA 12 MACMT, PA 12 MACMI MACMT, PA 6I/6T, PA 12 MACM36, PA NDT INDT, PA NDI INDI, PA 6I/6T MACMI, PA 12 6T, PA 6I MACMT et PA MACMI MACMX,
les copolyamides comprenant en tant qu'additif retardateur de combustion, en des proportions de 4 à 40% en poids, au moins une molécule d'acide alkylphosphonique dissoute dans le polyamide et répondant à la formule générale I 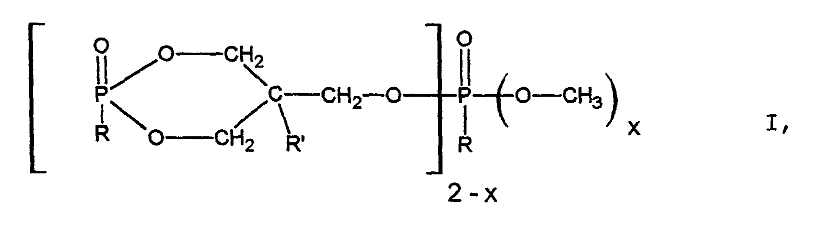 où R et R' sont indépendamment l'un de l'autre un résidu alkyle de C₁ à C₄ et x = 0 ou 1.

2. Copolyamides selon la revendication 1, caractérisés en ce que les dérivés alkylés d'hexaméthylène sont sélectionnés parmi le groupe constitué par le 1,6-diamino-2,2',4-triméthylhexane et le 1, 6-diamino-2,4,4'-triméthylhexane.

3. Copolyamides selon la revendication 1, caractérisés en ce que les diamines cycloaliphatiques sont sélectionnées parmi le groupe constitué par le bis-(p-aminocyclohexyl)méthane, le 3,3'-diméthyl-4,4'-diamino-dicyclohexylméthane, le 4,4'-diamino-dicyclohexyl-2,2'-propane et la 3-aminométhyl-3,5,5-triméthylcyclohexylamine.

4. Copolyamides selon la revendication 1, caractérisés en ce que le résidu R' est un résidu C₂H₅-.

5. Copolyamides selon la revendication 1, caractérisés en ce que le résidu R est un résidu CH₃-.

6. Copolyamides selon l'une quelconque des revendications précédentes, caractérisés en ce que pour atteindre la qualification VO selon UL-94, la molécule d'acide alkylphosphonique est comprise en des proportions de 4 à 10% en poids.

7. Copolyamides selon l'une quelconque des revendications précédentes, caractérisés en ce qu'ils comprennent en tant qu'additif retardateur de combustion l'ester de triméthylolpropane d'un acide méthylphosphonique, et plus particulièrement le méthylphosphonate-bis-[(5-éthyle-2-méthyle-1,3,2-dioxaphosphorinan-5-yle)méthyle]ester-P-P'-dioxide.

8. Matières à mouler, et plus particulièrement formes à mouler, difficilement combustibles et répondant à la qualification VO selon UL-94, fabriquées à partir de copolyamides transparents selon l'une quelconque des revendications 1 à 7.

9. Matières à mouler, et plus particulièrement formes à mouler, difficilement combustibles et répondant à la qualification VO selon UL-94, fabriquées à partir d'un mélange de copolyamides transparents selon l'une quelconque des revendications 1 à 7 et de polymères additionnels issus du groupe des PET, PBT, PC, PVC, PVA, PU, PE, PP et PPS, pour lesquelles les mélanges peuvent être modifiés par des additifs issus du groupe constitué par les modificateurs de résistance aux chocs, les plastifiants, les stabilisateurs, les agents durcisseurs, les pigments, les colorants et les agents de remplissage.

10. Utilisation des copolyamides selon l'une quelconque des revendications 1 à 7 pour la fabrication de fils, câbles, connecteurs et plaques, difficilement combustibles et répondant à la qualification VO selon UL-94.
